# EUROPEAN PATENT SPECIFICATION

(11) **EP 3 511 853 B1**
(45) Date of publication and mention of the grant of the patent: **24.11.2021**
(21) Application number: 16916583.4
(22) Date of filing: 26.09.2016
(51) Int. Cl.: G06F 21/44, G06F 21/72, G06F 21/71

(54) **SECURITY AUTHENTICATION METHOD, INTEGRATED CIRCUIT AND SYSTEM**
SICHERHEITSAUTHENTIFIZIERUNGSVERFAHREN, INTEGRIERTE SCHALTUNG UND SYSTEM
PROCÉDÉ D'AUTHENTIFICATION DE SÉCURITÉ, CIRCUIT INTÉGRÉ ET SYSTÈME

(43) Date of publication of application: 17.07.2019
(73) Proprietor: Huawei Technologies Co., Ltd., Longgang District Shenzhen, Guangdong 518129 (CN)
(72) Inventor: XU, Wei, Shenzhen Guangdong 518129 (CN)
(74) Representative: Maiwald Patent- und Rechtsanwaltsgesellschaft mbH
(86) International application number: PCT/CN2016/100127
(87) International publication number: WO 2018/053844

(56) References cited:
- WO-A2-2004/092931
- CN-A- 1 897 520
- CN-A- 1 897 520
- CN-A- 101 188 616
- CN-A- 101 977 073
- CN-A- 103 491 094
- CN-A- 103 701 596
- CN-A- 103 974 122
- US-A1- 2005 228 886
- US-A1- 2013 101 120

## Description

### TECHNICAL FIELD

The present invention relates to the field of electronic technologies, and in particular, to a security authentication method and system, and an integrated circuit.

### BACKGROUND

With development of technologies, an application range of an integrated circuit is increasingly wide. Accordingly, a test for the integrated circuit is increasingly important. Generally, a test platform dedicated for the joint test action group (JTAG) is mainly connected to a JTAG port included in the integrated circuit, so as to test internal logic of the integrated circuit. To ensure security of the internal logic of the integrated circuit in a test process, security authentication needs to be performed on a to-be-accessed test platform.

Currently, a manner of the security authentication on the test platform is usually as follows: A security password module is added to the integrated circuit, and a key is stored in the security password module. When a test is required, a tester may enter a key into the security password module. When receiving the key entered by the tester, the security password module compares the received key with the stored key. When the received key is the same as the stored key, the security password module determines that the security authentication on the test platform succeeds.

However, when the security authentication is performed in the foregoing manner, if keys stored in all integrated circuits are a same key, internal logic of all the integrated circuits leaks when the key is leaked, thereby causing technical leakage; and if the keys stored in all the integrated circuits are different, a quantity of keys is increased, thereby causing inconvenience to key management. The CN1897520A refers to a method and a system for performing communication security authentication.

To resolve a problem in the prior art, embodiments of the present application provide a security authentication method and system, and an integrated circuit. The technical solutions are as follows:

According to a first aspect, this application provides a security authentication method, where the method includes:
receiving, by an integrated circuit, an authentication request sent by a test platform, and generating a first random number;
sending the first random number to the test platform, so that the test platform sends the first random number to an encryption platform;
receiving a random number ciphertext sent by the test platform, where the random number ciphertext is obtained after the encryption platform encrypts the first random number;
decrypting the random number ciphertext to obtain a second random number; and
performing security authentication on the test platform based on the first random number and the second random number.

It should be noted that the integrated circuit may include a JTAG hardware security authentication engine, and may generate the first random number by using the JTAG hardware security authentication engine.

In addition, the integrated circuit may complete, by using the JTAG hardware security authentication engine, operations of generating the first random number, decrypting the ciphertext to generate the second random number, performing the authentication based on the first random number and the second random number, and the like in subsequent steps.

The encryption platform may encrypt the first random number by using a stored private key.

In addition, after the private key is stored in the encryption platform, the private key cannot be externally presented in a plaintext form. To be specific, in a process of performing the security authentication, the private key cannot be externally presented in the plaintext form, thereby ensuring privacy of the private key, preventing leakage of the private key, and improving reliability of the security authentication.

With reference to the first aspect, in a first possible implementation of the first aspect, the integrated circuit stores a hash value of a first public key, and the authentication request carries a second public key; and
correspondingly, the generating a first random number includes:
determining a hash value of the second public key;
comparing the hash value of the first public key with the hash value of the second public key; and
when the hash value of the first public key is the same as the hash value of the second public key, generating the first random number.

It should be noted that, in this application, the first public key and the private key are a pair of asymmetric keys.

In addition, the first public key or the hash value of the first public key may be directly stored in the JTAG hardware security authentication engine, and when performing the security authentication, the to-be-detected integrated circuit may directly use the first key or the hash value of the first key, thereby improving efficiency of the authentication.

It should be further noted that, by comparing the hash value of the first public key with the hash value of the second public key, preliminary determining of the second public key may be completed, thereby ensuring the reliability of performing the security authentication.

With reference to the first aspect, in another possible implementation of the first aspect, the generating a first random number includes:
when the authentication request carries the second public key, receiving, by the integrated circuit, the authentication request, and directly generating a first random number.

With reference to the first aspect, in another possible implementation of the first aspect, the generating a first random number includes:
when the authentication request does not carry the second public key, receiving, by the integrated circuit, the authentication request, and directly generating a first random number.

With reference to the another possible implementation of the first aspect, optionally, the integrated circuit may store the hash value of the first public key or the first public key.

In this application, the integrated circuit stores the hash value of the first public key, and storage space occupied by the hash value of the first public key is relatively small, thereby saving storage space of the integrated circuit. In addition, the integrated circuit stores the first public key, and the integrated circuit may directly generate the first random number, thereby speeding up subsequent security authentication.

With reference to the first aspect or any possible implementation of the first aspect, in a second possible implementation of the first aspect, the performing security authentication on the test platform based on the first random number and the second random number includes:
determining whether the second random number is the same as the first random number;
when the second random number is the same as the first random number, determining that the security authentication on the test platform succeeds; or
when the second random number is different from the first random number, determining that the security authentication on the test platform fails.

It should be noted that, a random number generated by the integrated circuit each time is different. Therefore, a plurality of integrated circuits may use a same public key for decryption, and there is no need to set a public key for each integrated circuit. This not only improves security of the security authentication, but also reduces costs of setting the public key.

With reference to any one of the first aspect to the second possible implementation of the first aspect, in a third possible implementation of the first aspect, the decrypting the random number ciphertext to obtain a second random number includes:
when the integrated circuit stores the hash value of the first public key, and the authentication request carries the second public key, decrypting the random number ciphertext by using the second public key, to obtain the second random number; or
when the integrated circuit stores the first public key, decrypting the random number ciphertext by using the first public key, to obtain the second random number.

It should be noted that, the hash value of the first public key or the first public key may be burned and fixed into internal space of the JTAG hardware security authentication engine included in the integrated circuit, so as to store the hash value of the first public key or the first public key into the integrated circuit.

It should be further noted that, the hash value of the first public key or the first public key is burned and fixed into the internal space of the JTAG hardware security authentication engine included in the integrated circuit, and it can be ensured that the hash value of the first public key or the first public key cannot be changed, thereby improving the security and the reliability of performing the security authentication.

With reference to any one of the first aspect to the second possible implementation of the first aspect, in another possible implementation of the first aspect, the decrypting the random number ciphertext to obtain a second random number includes:
when the integrated circuit stores the hash value of the first public key, and receives both the random number ciphertext and the second public key, determining, by the integrated circuit, the hash value of the second public key;
comparing the hash value of the first public key with the hash value of the second public key; and
when the hash value of the first public key is the same as the hash value of the second public key, decrypting the random number ciphertext by using the second public key, to obtain the second random number.

With reference to any one of the first aspect to the second possible implementation of the first aspect, in another possible implementation of the first aspect, the decrypting the random number ciphertext to obtain a second random number includes:
when the integrated circuit stores the hash value of the first public key, and the authentication request carries the second public key, determining, by the integrated circuit, the hash value of the second public key;
comparing the hash value of the first public key with the hash value of the second public key; and
when the hash value of the first public key is the same as the hash value of the second public key, decrypting the random number ciphertext by using the second public key, to obtain the second random number.

According to a second aspect, this application provides another security authentication method, where the method includes:
sending, by a test platform, an authentication request to an integrated circuit;
receiving, by the integrated circuit, the authentication request, generating a first random number, and sending the first random number to the test platform;
receiving, by the test platform, the first random number, and sending the first random number to an encryption platform;
receiving, by the encryption platform, the first random number, encrypting the first random number to obtain a random number ciphertext, and sending the random number ciphertext to the test platform;
receiving, by the test platform, the random number ciphertext, and sending the random number ciphertext to the integrated circuit;
receiving, by the integrated circuit, the random number ciphertext, and decrypting the random number ciphertext to obtain a second random number; and
performing, by the integrated circuit, security authentication on the test platform based on the first random number and the second random number.

It should be noted that the integrated circuit may include a JTAG hardware security authentication engine, and may generate the first random number by using the JTAG hardware security authentication engine.

With reference to the second aspect, in a first possible implementation of the second aspect, the generating a first random number includes:
when the authentication request carries a second public key, and the integrated circuit stores a hash value of a first public key,
determining, by the to-be-tested circuit, a hash value of the second public key;
comparing the hash value of the second public key with the hash value of the first public key; and
when the hash value of the first public key is the same as the hash value of the second public key, generating the first random number.

It should be noted that, storage space occupied by the hash value of the first public key is relatively small. Therefore, the integrated circuit stores the hash value of the first public key, thereby saving storage space of the integrated circuit.

It should be further noted that, by comparing the hash value of the first public key with the hash value of the second public key, preliminary determining of the second public key may be completed, thereby ensuring reliability of performing the security authentication.

With reference to the second aspect, in another possible implementation of the second aspect, the generating a first random number includes:
when the authentication request carries the second public key, receiving, by the integrated circuit, the authentication request, and directly generating a first random number.

With reference to the second aspect, in another possible implementation of the second aspect, the generating a first random number includes:
when the authentication request does not carry the second public key, receiving, by the integrated circuit, the authentication request, and directly generating a first random number.

With reference to the another possible implementation of the second aspect, optionally, the integrated circuit may store the hash value of the first public key or the first public key. With reference to the second aspect or any possible implementation of the second aspect, in a second possible implementation of the second aspect, the encrypting the first random number to obtain a random number ciphertext includes:
encrypting the first random number by using a stored private key, to obtain the random number ciphertext.

It should be noted that, after the private key is stored in the encryption platform, the private key cannot be externally presented in a plaintext form. To be specific, in a process of performing the security authentication, the private key cannot be externally presented in the plaintext form, thereby ensuring privacy of the private key, preventing leakage of the private key, and improving the reliability of the security authentication.

With reference to any one of the second aspect to the second possible implementation of the second aspect, in a third possible implementation of the second aspect, the decrypting the random number ciphertext to obtain a second random number includes:
when the integrated circuit stores the hash value of the first public key, and the authentication request carries the second public key, decrypting, by the integrated circuit, the random number ciphertext by using the second public key, to obtain the second random number; or
when the integrated circuit stores the first public key, decrypting, by the integrated circuit, the random number ciphertext by using the first public key, to obtain the second random number.

It should be noted that, the hash value of the first public key or the first public key may be burned and fixed into internal space of the JTAG hardware security authentication engine included in the integrated circuit, so as to store the hash value of the first public key or the first public key into the integrated circuit.

It should be further noted that, the hash value of the first public key or the first public key is burned and fixed into the internal space of the JTAG hardware security authentication engine included in the integrated circuit, and it can be ensured that the hash value of the first public key or the first public key cannot be changed, thereby improving security and reliability of performing the security authentication.

With reference to any one of the second aspect to the second possible implementation of the second aspect, in another possible implementation of the second aspect, the decrypting the random number ciphertext to obtain a second random number includes:
when the integrated circuit stores the hash value of the first public key, and receives both the random number ciphertext and the second public key, determining, by the integrated circuit, the hash value of the second public key;
comparing the hash value of the first public key with the hash value of the second public key; and
when the hash value of the first public key is the same as the hash value of the second public key, decrypting the random number ciphertext by using the second public key, to obtain the second random number.

With reference to any one of the second aspect to the second possible implementation of the second aspect, in another possible implementation of the second aspect, the decrypting the random number ciphertext to obtain a second random number includes:
when the integrated circuit stores the hash value of the first public key, and the authentication request carries the second public key, determining, by the integrated circuit, the hash value of the second public key;
comparing the hash value of the first public key with the hash value of the second public key; and
when the hash value of the first public key is the same as the hash value of the second public key, decrypting the random number ciphertext by using the second public key, to obtain the second random number.

With reference to any one of the second aspect and the possible implementations of the second aspect, in a fourth possible implementation of the second aspect, the performing, by the integrated circuit, security authentication on the test platform based on the first random number and the second random number includes:
determining whether the second random number is the same as the first random number;
when the second random number is the same as the first random number, determining that the security authentication on the test platform succeeds; or
when the second random number is different from the first random number, determining that the security authentication on the test platform fails.

It should be noted that, a random number generated by the integrated circuit each time is different. Therefore, a plurality of integrated circuits may use a same public key for decryption, and there is no need to set a public key for each integrated circuit. This not only improves the security of the security authentication, but also reduces costs of setting the public key.

According to a third aspect, this application provides an integrated circuit, where the integrated circuit includes:
a generation module, configured to generate a first random number;
a sending module, configured to send the first random number generated by the generation module to a test platform, so that the test platform sends the first random number to an encryption platform;
a receiving module, configured to: receive an authentication request sent by the test platform, and receive a random number ciphertext sent by the test platform, where the random number ciphertext is obtained after the encryption platform encrypts the first random number;
a decryption module, configured to decrypt the random number ciphertext received by the receiving module, to obtain a second random number; and
an authentication module, configured to perform security authentication on the test platform based on the first random number and the second random number that is obtained by the decryption module through decryption.

With reference to the third aspect, in a first possible implementation of the third aspect, the integrated circuit stores a hash value of a first public key; and
the generation module includes:
a first determining unit, configured to determine a hash value of a second public key in the authentication request;
a comparison unit, configured to compare the hash value of the first public key with the hash value that is of the second public key and that is determined by the first determining unit; and
a generation unit, configured to: when the hash value of the first public key is the same as the hash value of the second public key, generate the first random number.

With reference to the third aspect or the first possible implementation of the third aspect, in a second possible implementation of the third aspect, the authentication module includes:
a determining unit, configured to determine whether the second random number is the same as the first random number;
a second determining unit, configured to: when the determining unit determines that the second random number is the same as the first random number, determine that the security authentication on the test platform succeeds; and
a third determining unit, configured to: when the determining unit determines that the second random number is different from the first random number, determine that the security authentication on the test platform fails.

With reference to any one of the third aspect to the second possible implementation of the third aspect, in a third possible implementation of the third aspect, the decryption module includes:
a first decryption unit, configured to decrypt the random number ciphertext by using the second public key in the authentication request, to obtain the second random number; or
a second decryption unit, configured to decrypt the random number ciphertext by using the first public key stored in the integrated circuit, to obtain the second random number.

According to a fourth aspect, this application provides an integrated circuit, where the integrated circuit includes a processor and a memory. The memory is configured to store data and/or a program instruction required by the integrated circuit in the security authentication method provided in the foregoing aspects. The processor is configured to perform functions corresponding to the integrated circuit in the foregoing aspects. The integrated circuit may further include a communications bus, and the communications bus is configured to establish a connection between the processor and the memory. In a possible design, the integrated circuit may further include a communications unit, configured to support the integrated circuit in implementing communication with the test platform in the foregoing aspects. Optionally, the integrated circuit may further include a receiver and/or a transmitter, configured to support the integrated circuit in implementing data and/or instruction receiving and/or sending mentioned in the foregoing aspects.

According to a fifth aspect, this application provides a test platform, where a structure of the test platform includes a processor and a memory. The memory is configured to store data and/or a program instruction used for supporting the test platform in performing the security authentication method provided in the second aspect. The processor is configured to perform functions corresponding to the test platform in the second aspect. The test platform may further include a communications bus, and the communications bus is configured to establish a connection between the processor and the memory. In a possible design, the test platform may further include a communications unit, configured to support the test platform in implementing communication with the integrated circuit and/or communication with the encryption platform in the second aspect. Optionally, the test platform may further include a receiver and/or a transmitter, configured to support the test platform in implementing data and/or instruction receiving and/or sending mentioned in the second aspect.

According to a sixth aspect, this application provides an encryption platform, where a structure of the encryption platform includes a processor and a memory. The memory is configured to store a program that supports the encryption platform in performing the security authentication method provided in the second aspect, and store data used for implementing the security authentication method provided in the second aspect, for example, a private key. The processor is configured to execute the program stored in the memory. The encryption platform may further include a communications bus, and the communications bus is configured to establish a connection between the processor and the memory. In a possible design, the encryption platform may further include a communications unit, configured to support the encryption platform in implementing communication with the test platform in the second aspect. Optionally, the encryption platform may further include a receiver and/or a transmitter, configured to support the encryption platform in implementing data and/or instruction receiving and/or sending mentioned in the second aspect.

According to a seventh aspect, this application provides a security authentication system, where the system includes the integrated circuit in the fourth aspect, the test platform in the fifth aspect, and the encryption platform in the sixth aspect.

According to an eighth aspect, an embodiment of this application provides a test platform, where the test platform has a function of implementing behavior of the test platform in the foregoing method embodiments. The function may be implemented by hardware, or may be implemented by hardware by executing corresponding software. The hardware or software includes one or more modules corresponding to the foregoing function.

According to a ninth aspect, an embodiment of this application provides an encryption platform, where the encryption platform has a function of implementing behavior of the encryption platform in the foregoing method embodiments. The function may be implemented by hardware, or may be implemented by hardware by executing corresponding software. The hardware or software includes one or more modules corresponding to the foregoing function.

According to a tenth aspect, an embodiment of this application provides a computer storage medium, configured to store a computer software instruction used by the foregoing integrated circuit, and the computer storage medium includes a program designed for performing the foregoing aspects.

According to an eleventh aspect, an embodiment of this application provides a computer storage medium, configured to store a computer software instruction used by the foregoing test platform, and the computer storage medium includes a program designed for performing the foregoing aspects.

According to a twelfth aspect, an embodiment of this application provides a computer storage medium, configured to store a computer software instruction used by the foregoing encryption platform, and the computer storage medium includes a program designed for performing the foregoing aspects.

The technical solutions provided in the embodiments of the present invention bring the following beneficial effects: In the embodiments of the present invention, when receiving the authentication request sent by the test platform, the integrated circuit may generate the first random number, and send the first random number to the test platform. The test platform sends the first random number to the encryption platform. Then, the integrated circuit receives the random number ciphertext obtained after the encryption platform encrypts the first random number, may decrypt the random number ciphertext to obtain the second random number, and perform the security authentication on the test platform by using the first random number and the second random number. The random number generated by the integrated circuit each time is different, and the random number ciphertext received by the integrated circuit is also different. Therefore, an unauthorized user is prevented from cracking the random number ciphertext of the integrated circuit, thereby improving the reliability and the security of the security authentication.

The invention is defined in the claims 1-15.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1A is a schematic architectural diagram of a security authentication system according to an embodiment of the present invention;
FIG. 1B is a schematic structural diagram of a first integrated circuit according to an embodiment of the present invention;
FIG. 2 is a flowchart of a first security authentication method according to an embodiment of the present invention;
FIG. 3 is a flowchart of a second security authentication method according to an embodiment of the present invention;
FIG. 4 is a flowchart of a third security authentication method according to an embodiment of the present invention;
FIG. 5A is a schematic structural diagram of a second integrated circuit according to an embodiment of the present invention;
FIG. 5B is a schematic structural diagram of a generation module according to an embodiment of the present invention;
FIG. 5C is a schematic structural diagram of an authentication module according to an embodiment of the present invention;
FIG. 5D is a schematic structural diagram of a decryption module according to an embodiment of the present invention;
FIG. 6 is a schematic structural diagram of a security authentication system according to an embodiment of the present invention; and
FIG. 7 is a schematic structural diagram of a third integrated circuit according to an embodiment of the present invention.

### DESCRIPTION OF EMBODIMENTS

To make the objectives, technical solutions, and advantages of the present invention clearer, the following further describes the implementations of the present invention in detail with reference to the accompanying drawings.

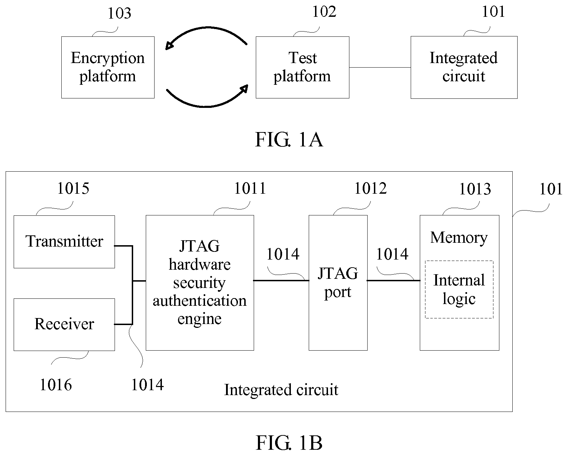

A system architecture of embodiments of the present invention is first described before the embodiments of the present invention are described in detail. FIG. 1A is a schematic architectural diagram of a security authentication system according to an embodiment of the present invention. As shown in FIG. 1, the system includes an integrated circuit 101, a test platform 102, and an encryption platform 103. The integrated circuit 101 may be connected to the test platform 102, and the test platform 102 may be connected to the encryption platform 103 by using a network. The integrated circuit 101 may exchange data with the test platform 102, and the test platform 102 may exchange data with the encryption platform 103 by using the network, so that the integrated circuit 101 completes security authentication on the test platform 102. The test platform may send an authentication request to the integrated circuit. When receiving the authentication request, the integrated circuit may generate a first random number, and send the first random number to the test platform. The test platform sends the first random number to the encryption platform. When receiving the first random number, the encryption platform encrypts the first random number to obtain a random number ciphertext, and returns the random number ciphertext to the test platform. The test platform sends the random number ciphertext to the integrated circuit. When receiving the random number ciphertext, the integrated circuit may decrypt the random number ciphertext to obtain a second random number, and then complete the security authentication on the test platform by using the first random number and the second random number.

In addition, referring to FIG. 1B, the integrated circuit 101 may include a JTAG hardware security authentication engine 1011, a JTAG port 1012, a memory 1013, a communications bus 1014, a transmitter 1015, and a receiver 1016. The JTAG hardware security authentication engine 1011 is connected to the transmitter 1015 and the receiver 1016 by using the communications bus 1014. The transmitter 1015 and the receiver 1016 are connected to the test platform 102. The JTAG hardware security authentication engine 1011 may serve as a processor of the integrated circuit 101, so that the JTAG hardware security authentication engine 1011 may separately exchange data with the test platform 102 by using the transmitter 1015 and the receiver 1016, to perform the security authentication on the test platform 102. The JTAG hardware security authentication engine 1011 is connected to the JTAG port 1012 by using the communications bus 1014. The JTAG port 1012 is also connected to the memory 1013 by using the communications bus 1014. The memory 1013 stores internal logic of the integrated circuit 101. After determining, by using the JTAG hardware security authentication engine 1011, that the security authentication on the test platform 102 succeeds, the integrated circuit 101 may open the JTAG port 1012 to the test platform 102, so that the test platform 102 may test, by using the JTAG port 1012, the internal logic stored in the memory.

It should be further noted that the JTAG hardware security authentication engine 1011, the JTAG port 1012, the memory 1013, the communications bus 1014, the transmitter 1015, and the receiver 1016 may be separately burned and fixed into the integrated circuit 101.

The processor, namely, the JTAG hardware security authentication engine 1011, may be a general-purpose central processing unit (CPU), a microprocessor, an application-specific integrated circuit (application-specific integrated circuit, ASIC), or one or more integrated circuits that are configured to control program execution of the solution of the present invention.

The communications bus 1014 may include a channel in which information is transmitted between the foregoing components.

The memory 1013 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a disk storage medium or another magnetic storage device, or any other medium that can be used to carry or store expected program code in a form of an instruction or a data structure and that can be accessed by an integrated circuit. However, this is not limited herein. The memory 1013 may independently exist, and is connected to the processor 1011 by using the communications bus 1014. Alternatively, the memory 1013 may be integrated with the processor 1101.

The transmitter 1015 and the receiver 1016 may be any apparatus like a transceiver, and are configured to communicate with another device or communications network, such as an Ethernet, a radio access network (RAN), or a wireless local area network (Wireless Local Area Network, WLAN). Optionally, in the present invention, the transmitter 1015 and the receiver 1016 may be connected to the another device in a plug-connected manner, so as to implement communication.

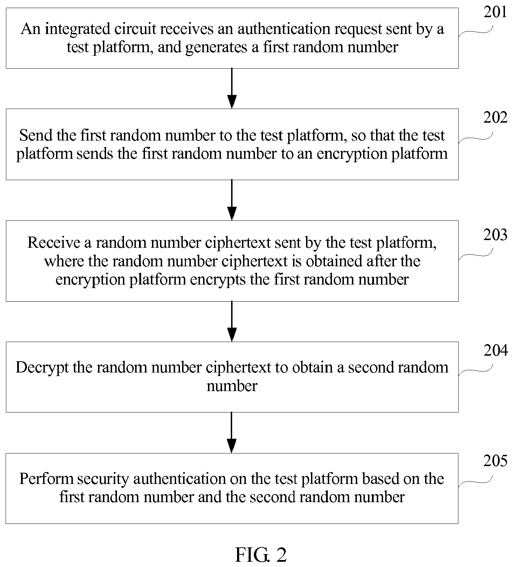

FIG. 2 is a flowchart of a security authentication method according to an example embodiment. Referring to FIG. 2, the method is applied to an integrated circuit, and the method includes the following steps:

Step 201. An integrated circuit receives an authentication request sent by a test platform, and generates a first random number.

Step 202. Send the first random number to the test platform, so that the test platform sends the first random number to an encryption platform.

Step 203. Receive a random number ciphertext sent by the test platform, where the random number ciphertext is obtained after the encryption platform encrypts the first random number.

Step 204. Decrypt the random number ciphertext to obtain a second random number.

Step 205. Perform security authentication on the test platform based on the first random number and the second random number.

In this embodiment of the present invention, when receiving the authentication request sent by the test platform, the integrated circuit may generate the first random number, and send the first random number to the test platform. The test platform sends the first random number to the encryption platform. Then, the integrated circuit receives the random number ciphertext obtained after the encryption platform encrypts the first random number, and may decrypt the random number ciphertext to obtain the second random number and perform the security authentication on the test platform by using the first random number and the second random number. A random number generated by the integrated circuit each time is different, and a random number ciphertext received by the integrated circuit is also different. Therefore, an unauthorized user is prevented from cracking the random number ciphertext of the integrated circuit, thereby improving reliability and security of the security authentication.

Optionally, the integrated circuit stores a hash value of a first public key, and the authentication request carries a second public key.

Correspondingly, the generating a first random number includes:
determining a hash value of the second public key;
comparing the hash value of the first public key with the hash value of the second public key; and
when the hash value of the first public key is the same as the hash value of the second public key, generating the first random number.

Optionally, the performing security authentication on the test platform based on the first random number and the second random number includes:
determining whether the second random number is the same as the first random number;
when the second random number is the same as the first random number, determining that the security authentication on the test platform succeeds; or
when the second random number is different from the first random number, determining that the security authentication on the test platform fails.

Optionally, the decrypting the random number ciphertext to obtain a second random number includes:
when the integrated circuit stores the hash value of the first public key, and the authentication request carries the second public key, decrypting the random number ciphertext by using the second public key, to obtain the second random number; or
when the integrated circuit stores the first public key, decrypting the random number ciphertext by using the first public key, to obtain the second random number.

All the foregoing optional technical solutions may be randomly combined to form optional embodiments of the present invention, and details are not described herein in this embodiment of the present invention.

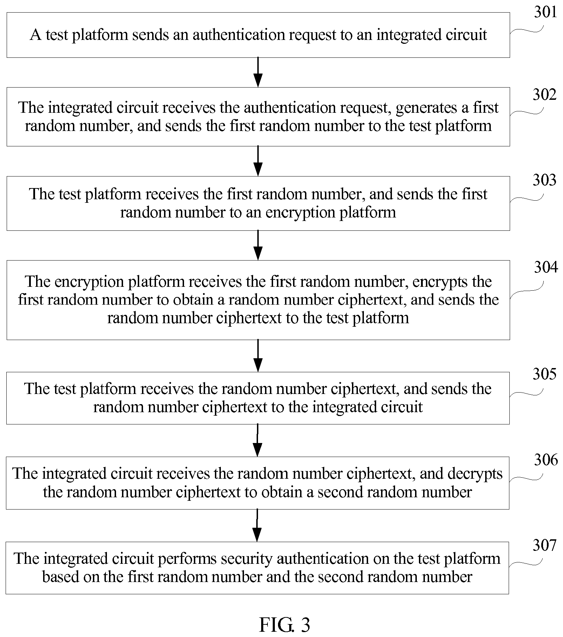

FIG. 3 is a flowchart of another security authentication method according to an example embodiment. Referring to FIG. 3, the method includes the following steps:

Step 301. A test platform sends an authentication request to an integrated circuit.

Step 302. The integrated circuit receives the authentication request, generates a first random number, and sends the first random number to the test platform.

Step 303. The test platform receives the first random number, and sends the first random number to an encryption platform.

Step 304. The encryption platform receives the first random number, encrypts the first random number to obtain a random number ciphertext, and sends the random number ciphertext to the test platform.

Step 305. The test platform receives the random number ciphertext, and sends the random number ciphertext to the integrated circuit.

Step 306. The integrated circuit receives the random number ciphertext, and decrypts the random number ciphertext to obtain a second random number.

Step 307. The integrated circuit performs security authentication on the test platform based on the first random number and the second random number.

In this embodiment of the present invention, when receiving the authentication request sent by the test platform, the integrated circuit may generate the first random number, and send the first random number to the test platform. The test platform sends the first random number to the encryption platform. When receiving the first random number, the encryption platform encrypts the first random number to obtain the random number ciphertext, and returns the random number ciphertext to the test platform. The test platform sends the random number ciphertext to the integrated circuit. When receiving the random number ciphertext, the integrated circuit may decrypt the random number ciphertext to obtain the second random number, and then perform the security authentication on the test platform by using the first random number and the second random number. A random number generated by the integrated circuit each time is different, and a random number ciphertext received by the integrated circuit is also different. Therefore, an unauthorized user is prevented from cracking the random number ciphertext of the integrated circuit, thereby improving reliability and security of the security authentication.

Optionally, the generating a first random number includes:
when the authentication request carries a second public key, and the integrated circuit stores a hash value of a first public key,
determining, by the integrated circuit, a hash value of the second public key;
comparing the hash value of the second public key with the hash value of the first public key; and
when the hash value of the first public key is the same as the hash value of the second public key, generating the first random number.

Optionally, the encrypting the first random number to obtain a random number ciphertext includes:
encrypting the first random number by using a stored private key, to obtain the random number ciphertext.

Optionally, the decrypting the random number ciphertext to obtain a second random number includes:
when the integrated circuit stores the hash value of the first public key, and the authentication request carries the second public key, decrypting, by the integrated circuit, the random number ciphertext by using the second public key, to obtain the second random number; or
when the integrated circuit stores the first public key, decrypting, by the integrated circuit, the random number ciphertext by using the first public key, to obtain the second random number.

Optionally, that the integrated circuit performs security authentication on the test platform based on the first random number and the second random number includes:
determining whether the second random number is the same as the first random number;
when the second random number is the same as the first random number, determining that the security authentication on the test platform succeeds; or
when the second random number is different from the first random number, determining that the security authentication on the test platform fails.

All the foregoing optional technical solutions may be randomly combined to form optional embodiments of the present invention, and details are not described herein in this embodiment of the present invention.

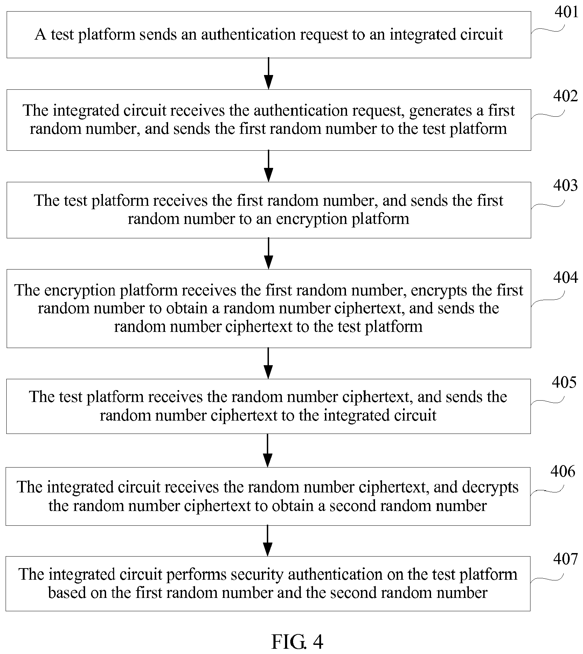

FIG. 4 is a flowchart of another security authentication method according to an example embodiment. Referring to FIG. 4, the method includes the following steps.

Step 401. A test platform sends an authentication request to an integrated circuit.

After the test platform is connected to the integrated circuit, the test platform may send the authentication request to the integrated circuit.

It should be noted that when the test platform sends the authentication request to the integrated circuit, the authentication request may carry a second public key, or may not carry a second public key. This is not specifically limited in this embodiment of the present invention.

In addition, the second public key carried in the authentication request may be stored in the test platform, or may be stored in an encryption platform. This is not specifically limited in this embodiment of the present invention.

It should be further noted that, the second public key is stored in the encryption platform, and the encryption platform is kept confidential and can ensure that the second public key is not leaked, improving reliability of security authentication. Therefore, the second public key may be preferentially stored in the encryption platform.

The second public key may be stored in the encryption platform, or may be stored in the test platform. Therefore, before the test platform sends the authentication request to the integrated circuit, the second public key is stored in the encryption platform, and the test platform may send an obtaining request to the encryption platform. After receiving the obtaining request, the encryption platform may return the second public key to the test platform based on the obtaining request. The second public key may be stored in the test platform, and the test platform may directly send the authentication request to the integrated circuit based on the second public key.

Step 402. The integrated circuit receives the authentication request, generates a first random number, and sends the first random number to the test platform.

It should be noted that the integrated circuit may store the first public key, or may store a hash value of the first public key. This is not specifically limited in this embodiment of the present invention.

It should be noted that, in this embodiment of the present invention, the hash value of the first public key or the first public key may be burned and fixed into internal space of a JTAG hardware security authentication engine included in the integrated circuit, so as to store the hash value of the first public key or the first public key into the integrated circuit. The internal space may be an electrically programmable fuse, or may be another element. This is not specifically limited in this embodiment of the present invention. In addition, after the hash value of the first public key or the first public key is burned and fixed into the internal space of the JTAG hardware security authentication engine included in the integrated circuit, the hash value of the first public key or the first public key cannot be changed, thereby improving security and reliability of performing the security authentication.

In a possible implementation, when the authentication request does not carry the second public key and the integrated circuit stores the first public key, the integrated circuit may receive the authentication request, and directly generate the first random number.

In another possible implementation, when the authentication request carries the second public key and the integrated circuit stores the hash value of the first public key, the integrated circuit may determine a hash value of the second public key when receiving the authentication request; compare the hash value of the second public key with the hash value of the first public key; and when the hash value of the first public key is the same as the hash value of the second public key, generate the first random number.

In the foregoing another possible implementation, because the integrated circuit compares the hash value of the first public key with the hash value of the second public key, further, when the hash value of the first public key is the same as the hash value of the second public key, the integrated circuit generates the first random number. To be specific, a to-be-tested circuit may preliminarily determine the second public key, thereby ensuring the reliability of performing the security authentication.

In addition, when the hash value of the first public key is different from the hash value of the second public key, the integrated circuit may directly determine that the security authentication fails, and send information indicating the security authentication failure to the test platform, and no subsequent operation is required.

It should be noted that, for an operation of determining the hash value of the second public key by the integrated circuit, refer to a related technology. Details are not described again in this embodiment of this disclosure.

Optionally, when the authentication request does not carry the second public key and the integrated circuit stores the hash value of the first public key, the integrated circuit may also receive the authentication request, and directly generate the first random number.

Optionally, when the authentication request carries the second public key and the integrated circuit stores the hash value of the first public key, the integrated circuit may also receive the authentication request, and directly generate the first random number.

It should be noted that, the integrated circuit may generate the first random number by using the included JTAG hardware security authentication engine. For an operation of generating the first random number by the integrated circuit, refer to a related technology. Details are not described again in this embodiment of the present invention.

In this embodiment of the present invention, the integrated circuit stores the hash value of the first public key, and storage space occupied by the hash value of the first public key is relatively small, thereby saving storage space of the integrated circuit. In addition, the integrated circuit stores the first public key, and the integrated circuit may directly generate the first random number, thereby speeding up subsequent security authentication.

Step 403. The test platform receives the first random number, and sends the first random number to an encryption platform.

To ensure security of subsequent authentication, the test platform may further send an identifier authentication request to the encryption platform, and the identifier authentication request may carry an authentication identifier.

It should be noted that the authentication identifier is used to uniquely identify whether the test platform is a security test platform, and the authentication identifier may be a delivery sequence number, a MAC (Media Access Control, media access control) address, and the like of the test platform.

Step 404. The encryption platform receives the first random number, encrypts the first random number to obtain a random number ciphertext, and sends the random number ciphertext to the test platform.

The encryption platform may encrypt the first random number by using a stored private key, to obtain the random number ciphertext.

It should be noted that after the private key is stored in the encryption platform, the private key is not externally presented in a plaintext form. To be specific, in a process of performing the security authentication, the private key cannot be externally presented in the plaintext form, thereby ensuring privacy of the private key, preventing leakage of the private key, and improving the reliability of the security authentication.

It should be further noted that the encryption platform encrypts the first random number by using the private key. For an operation of obtaining the random number ciphertext, refer to a related technology. Details are not described again in this embodiment of the present invention.

In addition, the test platform may send the identifier authentication request to the encryption platform. Therefore, before encrypting the first random number, the encryption platform may further receive the identifier authentication request, and perform authentication on the authentication identifier carried in the identifier authentication request. When an authentication result is secure, the first random number is encrypted; or when an authentication result is insecure, the first random number is not encrypted.

Step 405. The test platform receives the random number ciphertext, and sends the random number ciphertext to the integrated circuit.

When the authentication request does not carry the second public key and the integrated circuit stores the first public key, or the authentication request carries the second public key and the integrated circuit stores the hash value of the first public key, the test platform may directly send the random number ciphertext to the integrated circuit. When the authentication request does not carry the second public key and the integrated circuit stores the hash value of the first public key, the test platform may further send the second public key to the integrated circuit while sending the random number ciphertext to the integrated circuit.

Step 406. The integrated circuit receives the random number ciphertext, and decrypts the random number ciphertext to obtain a second random number.

An operation of decrypting the random number ciphertext by the integrated circuit to obtain the second random number may be: when the integrated circuit stores the hash value of the first public key and the authentication request carries the second public key, decrypting the random number ciphertext by using the second public key, to obtain the second random number; or when the integrated circuit stores the first public key, decrypting the random number ciphertext by using the first public key, to obtain the second random number.

It should be noted that, for an operation of decrypting the random number ciphertext by the integrated circuit by using the first public key, to obtain the second random number, and an operation of decrypting the random number ciphertext by using the second public key, to obtain the second random number, refer to a related technology. Details are not described again in this embodiment of the present invention.

Optionally, when the integrated circuit stores the hash value of the first public key and the integrated circuit receives both the random number ciphertext and the second public key, the integrated circuit may determine the hash value of the second public key; compare the hash value of the first public key with the hash value of the second public key; when the hash value of the first public key is different from the hash value of the second public key, determine that the security authentication fails, and return the information indicating the authentication failure to the test platform; or when the hash value of the first public key is the same as the hash value of the second public key, decrypt the random number ciphertext by using the second public key, to obtain the second random number.

Optionally, when the integrated circuit stores the hash value of the first public key and the authentication request carries the second public key, but the first random number is directly generated, and authentication is not performed on the second public key, the integrated circuit may determine the hash value of the second public key, and compare the hash value of the first public key with the hash value of the second public key; when the hash value of the first public key is different from the hash value of the second public key, determine that the security authentication fails, and return the information indicating the authentication failure to the test platform; or when the hash value of the first public key is the same as the hash value of the second public key, decrypt the random number ciphertext by using the second public key, to obtain the second random number.

Step 407. The integrated circuit performs security authentication on the test platform based on the first random number and the second random number.

An operation of performing the security authentication on the test platform by the integrated circuit based on the first random number and the second random number may be: determining whether the second random number is the same as the first random number; when the second random number is the same as the first random number, determining that the security authentication on the test platform succeeds; or when the second random number is different from the first random number, determining that the security authentication on the test platform fails.

It should be noted that, a random number generated by the integrated circuit each time is different. Therefore, a plurality of integrated circuits may use a same public key for decryption, and there is no need to set a public key for each integrated circuit. This not only improves the security of the security authentication, but also reduces costs of setting the public key.

In this embodiment of the present invention, when receiving the authentication request sent by the test platform, the integrated circuit may generate the first random number, and send the first random number to the test platform. The test platform sends the first random number to the encryption platform. When receiving the first random number, the encryption platform encrypts the first random number by using the stored private key, to obtain the random number ciphertext, and returns the random number ciphertext to the test platform. The test platform sends the random number ciphertext to the integrated circuit. When receiving the random number ciphertext, if the integrated circuit stores the hash value of the first public key, the integrated circuit decrypts the random number ciphertext by using the second public key, to obtain the second random number ciphertext, and if the integrated circuit stores the first public key, the integrated circuit may decrypt the random number ciphertext by using the first public key, to obtain the second random number, and perform the security authentication on the test platform by using the first random number and the second random number. The private key is stored in the encryption platform, thereby preventing leakage of the private key and ensuring the security of the security authentication. In addition, the random number generated by the integrated circuit each time is different, and a random number ciphertext received by the integrated circuit is also different. Therefore, the plurality of integrated circuits may use the same public key for decryption, and there is no need to set the public key for each integrated circuit. This not only prevents an unauthorized user from cracking the random number ciphertext of the integrated circuit and improves the security and the reliability of the security authentication, but also reduces the costs of setting the public key.

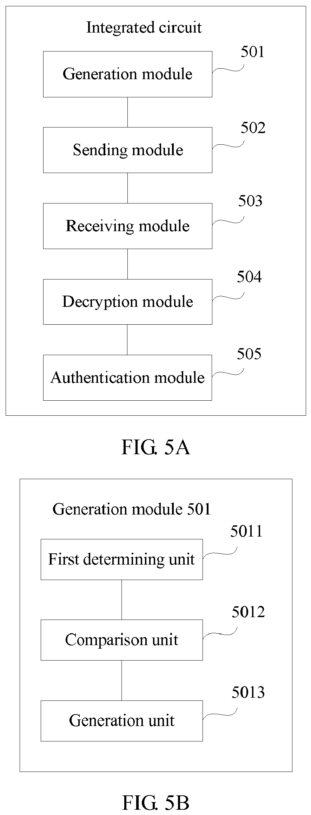

FIG. 5A is a schematic structural diagram of an integrated circuit according to an example embodiment. Referring to FIG. 5A, the integrated circuit includes a generation module 501, a sending module 502, a receiving module 503, a decryption module 504, and an authentication module 505.

The generation module 501 is configured to generate a first random number.

The sending module 502 is configured to send the first random number to the test platform, so that the test platform sends the first random number to an encryption platform.

The receiving module 503 is configured to: receive an authentication request sent by the test platform, and receive a random number ciphertext sent by the test platform, where the random number ciphertext is obtained after the encryption platform encrypts the first random number.

The decryption module 504 is configured to decrypt the random number ciphertext to obtain a second random number.

The authentication module 505 is configured to perform security authentication on the test platform based on the first random number and the second random number.

Optionally, referring to FIG. 5B, the integrated circuit stores a hash value of a first public key.

The generation module 501 includes:
a first determining unit 5011, configured to determine a hash value of a second public key in the authentication request;
a comparison unit 5012, configured to compare the hash value of the first public key with the hash value of the second public key; and
a generation unit 5013, configured to: when the hash value of the first public key is the same as the hash value of the second public key, generate the first random number.

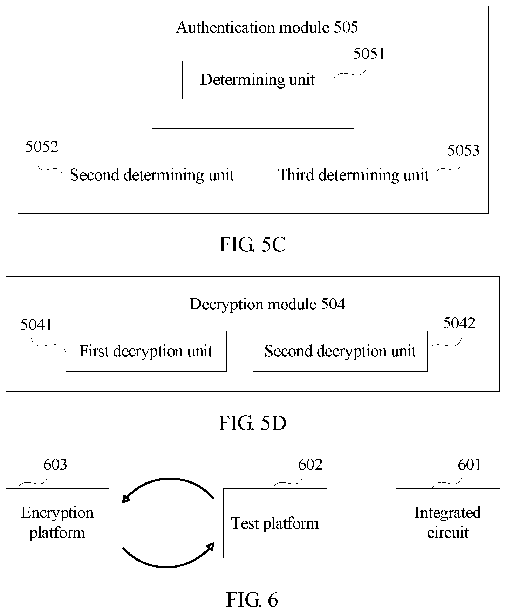

Optionally, referring to FIG. 5C, the authentication module 505 includes:
a determining unit 5051, configured to determine whether the second random number is the same as the first random number;
a second determining unit 5052, configured to: when the second random number is the same as the first random number, determine that the security authentication on the test platform succeeds; and
a third determining unit 5053, configured to: when the second random number is different from the first random number, determine that the security authentication on the test platform fails.

Optionally, referring to FIG. 5D, the decryption module 504 includes:
a first decryption unit 5041, configured to decrypt the random number ciphertext by using the second public key in the authentication request, to obtain the second random number; or
a second decryption unit 5042, configured to decrypt the random number ciphertext by using the first public key stored in the integrated circuit, to obtain the second random number.

In this embodiment of the present invention, when receiving the authentication request sent by the test platform, the integrated circuit may generate the first random number, and send the first random number to the test platform. The test platform sends the first random number to the encryption platform. Then, when the integrated circuit receives the random number ciphertext obtained after the encryption platform encrypts the first random number by using a stored private key, if the integrated circuit stores the hash value of the first public key, the integrated circuit decrypts the random number ciphertext by using the second public key, to obtain the second random number ciphertext, and if the integrated circuit stores the first public key, the integrated circuit may decrypt the random number ciphertext by using the first public key, to obtain the second random number, and perform the security authentication on the test platform by using the first random number and the second random number. The private key is stored in the encryption platform, thereby preventing leakage of the private key and ensuring security of the security authentication. In addition, a random number generated by the integrated circuit each time is different, and a random number ciphertext received by the integrated circuit is also different. Therefore, a plurality of integrated circuits may use a same public key for decryption, and there is no need to set a public key for each integrated circuit. This not only prevents an unauthorized user from cracking the random number ciphertext of the integrated circuit and improves the security and reliability of the security authentication, but also reduces costs of setting the public key.

FIG. 6 is a schematic structural diagram of a security authentication system according to an example embodiment. Referring to FIG. 6, the system includes a test platform 601, an integrated circuit 602, and an encryption platform 603 according to the foregoing embodiment.

The test platform 601 is configured to send an authentication request to the integrated circuit.

The integrated circuit 602 is configured to: when the integrated circuit receives the authentication request, generate a first random number, and send the first random number to the test platform.

The test platform 601 is further configured to: receive the first random number, and send the first random number to the encryption platform.

The encryption platform 603 is configured to: receive the first random number, encrypt the first random number to obtain a random number ciphertext, and send the random number ciphertext to the test platform.

The test platform 601 is further configured to: receive the random number ciphertext, and send the random number ciphertext to the integrated circuit.

The integrated circuit 602 is further configured to: receive the random number ciphertext, and decrypt the random number ciphertext to obtain a second random number.

The integrated circuit 602 is further configured to: perform security authentication on the test platform based on the first random number and the second random number.

Optionally, the integrated circuit 602 is further configured to:
determine a hash value of a second public key in the authentication request;
compare the hash value of the second public key with a hash value of a first public key; and
when the hash value of the first public key is the same as the hash value of the second public key, generate the first random number.

Optionally, the encryption platform 603 is further configured to:
encrypt the first random number by using a stored private key, to obtain the random number ciphertext.

Optionally, the integrated circuit 602 is further configured to:
decrypt the random number ciphertext by using the second public key carried in the authentication request, to obtain the second random number; or
decrypt the random number ciphertext by using the stored first public key, to obtain the second random number.

Optionally, the integrated circuit 602 is further configured to:
determine whether the second random number is the same as the first random number;
when the second random number is the same as the first random number, determine that the security authentication on the test platform succeeds; or
when the second random number is different from the first random number, determine that the security authentication on the test platform fails.

In this embodiment of the present invention, when receiving the authentication request sent by the test platform, the integrated circuit may generate the first random number, and send the first random number to the test platform. The test platform sends the first random number to the encryption platform. When receiving the first random number, the encryption platform encrypts the first random number by using the stored private key, to obtain the random number ciphertext, and returns the random number ciphertext to the test platform. The test platform sends the random number ciphertext to the integrated circuit. When receiving the random number ciphertext, if the integrated circuit stores the hash value of the first public key, the integrated circuit decrypts the random number ciphertext by using the second public key, to obtain the second random number ciphertext, and if the integrated circuit stores the first public key, the integrated circuit may decrypt the random number ciphertext by using the first public key, to obtain the second random number, and perform the security authentication on the test platform by using the first random number and the second random number. The private key is stored in the encryption platform, thereby preventing leakage of the private key and ensuring security of the security authentication. In addition, a random number generated by the integrated circuit each time is different, and a random number ciphertext received by the integrated circuit is also different. Therefore, a plurality of integrated circuits may use a same public key for decryption, and there is no need to set a public key for each integrated circuit. This not only prevents an unauthorized user from cracking the random number ciphertext of the integrated circuit and improves the security and reliability of the security authentication, but also reduces costs of setting the public key.

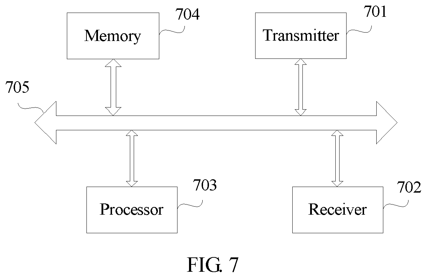

FIG. 7 is a schematic structural diagram of an integrated circuit according to an embodiment of the present invention. Referring to FIG. 7, the integrated circuit includes a transmitter 701, a receiver 702, a processor 703, a memory 704, and a communications bus 705.

The processor 703 is configured to: receive an authentication request sent by a test platform, and generate a first random number.

The transmitter 701 is configured to send the first random number to the test platform, so that the test platform sends the first random number to an encryption platform.

The receiver 702 is configured to receive a random number ciphertext sent by the test platform, and the random number ciphertext is obtained after the encryption platform encrypts the first random number.

The processor 703 is configured to decrypt the random number ciphertext to obtain a second random number.

The processor 703 is configured to perform security authentication on the test platform based on the first random number and the second random number.

Optionally, the integrated circuit stores a hash value of a first public key, and the authentication request carries a second public key.

Correspondingly, the processor 703 is further configured to:
determine a hash value of the second public key;
compare the hash value of the first public key with the hash value of the second public key; and
when the hash value of the first public key is the same as the hash value of the second public key, generate the first random number.

Optionally, the processor 703 is further configured to:
determine whether the second random number is the same as the first random number;
when the second random number is the same as the first random number, determine that the security authentication on the test platform succeeds; or
when the second random number is different from the first random number, determine that the security authentication on the test platform fails.

Optionally, the processor 703 is further configured to:
when the integrated circuit stores the hash value of the first public key and the authentication request carries the second public key, decrypt the random number ciphertext by using the second public key, to obtain the second random number; or
when the integrated circuit stores the first public key, decrypt the random number ciphertext by using the first public key, to obtain the second random number.

In this embodiment of the present invention, when receiving the authentication request sent by the test platform, the integrated circuit may generate the first random number, and send the first random number to the test platform. The test platform sends the first random number to the encryption platform. Then, when receiving the random number ciphertext obtained after the encryption platform encrypts the first random number, the integrated circuit may decrypt the random number ciphertext to obtain the second random number and perform the security authentication on the test platform by using the first random number and the second random number. A random number generated by the integrated circuit each time is different, and a random number ciphertext received by the integrated circuit is also different. Therefore, an unauthorized user is prevented from cracking the random number ciphertext of the integrated circuit, thereby improving reliability and security of the security authentication.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely example embodiments of the present invention, but are not intended to limit the present invention.

## Claims

1. A security authentication method, wherein the method comprises:
receiving (201), by an integrated circuit (101), an authentication request sent by a test platform (102), wherein the test platform (102) is configured to test the integrated circuit (101), and generating a first random number;
the integrated circuit (101) sending (202) the first random number to the test platform (102), so that the test platform (102) sends the first random number to an encryption platform (103) using a network;
receiving (203) a random number ciphertext sent by the test platform (102), wherein the random number ciphertext is obtained after the encryption platform (103) encrypts the first random number;
decrypting (204) the random number ciphertext to obtain a second random number; and
the integrated circuit (101) performing (205) security authentication on the test platform (102) based on the first random number and the second random number.

2. The method according to claim 1, wherein the integrated circuit (101) stores a hash value of a first public key, and the authentication request carries a second public key; and
correspondingly, the generating a first random number comprises:
determining a hash value of the second public key;
comparing the hash value of the first public key with the hash value of the second public key; and
when the hash value of the first public key is the same as the hash value of the second public key, generating the first random number.

3. The method according to claim 1 or 2, wherein the performing security authentication on the test platform (102) based on the first random number and the second random number comprises:
determining whether the second random number is the same as the first random number;
when the second random number is the same as the first random number, determining that the security authentication on the test platform (102) succeeds; or
when the second random number is different from the first random number, determining that the security authentication on the test platform (102) fails.

4. The method according to any one of claims 1 to 3, wherein the decrypting the random number ciphertext to obtain a second random number comprises:
when the integrated circuit (101) stores the hash value of the first public key, and the authentication request carries the second public key, decrypting the random number ciphertext by using the second public key, to obtain the second random number; or
when the integrated circuit (101) stores the first public key, decrypting the random number ciphertext by using the first public key, to obtain the second random number.

5. A security authentication method, wherein the method comprises:
sending (301), by a test platform (102), an authentication request to an integrated circuit (101), wherein the test platform (102) is configured to test the integrated circuit (101);
receiving (302), by the integrated circuit (101), the authentication request, generating a first random number, and sending the first random number to the test platform (102);
receiving (303), by the test platform (102), the first random number, and sending the first random number to an encryption platform (103) via a network;
receiving (304), by the encryption platform (103), the first random number, encrypting the first random number to obtain a random number ciphertext, and sending the random number ciphertext to the test platform (102);
receiving (305), by the test platform (102), the random number ciphertext, and sending the random number ciphertext to the integrated circuit (101);
receiving (306), by the integrated circuit (101), the random number ciphertext, and decrypting the random number ciphertext to obtain a second random number; and
performing (307), by the integrated circuit (101), security authentication on the test platform (102) based on the first random number and the second random number.

6. The method according to claim 5, wherein the generating a first random number comprises:
when the authentication request carries a second public key, and the integrated circuit (101) stores a hash value of a first public key,
determining, by the integrated circuit (101), a hash value of the second public key;
comparing the hash value of the second public key with the hash value of the first public key; and
when the hash value of the first public key is the same as the hash value of the second public key, generating the first random number.

7. The method according to claim 5 or 6, wherein the encrypting the first random number to obtain a random number ciphertext comprises:
encrypting the first random number by using a stored private key, to obtain the random number ciphertext.

8. The method according to any one of claims 5 to 7, wherein the decrypting the random number ciphertext to obtain a second random number comprises:
when the integrated circuit (101) stores the hash value of the first public key, and the authentication request carries the second public key, decrypting, by the integrated circuit (101), the random number ciphertext by using the second public key, to obtain the second random number; or
when the integrated circuit (101) stores the first public key, decrypting, by the integrated circuit (101), the random number ciphertext by using the first public key, to obtain the second random number.

9. The method according to any one of claims 5 to 8, wherein the performing, by the integrated circuit (101), security authentication on the test platform (102) based on the first random number and the second random number comprises:
determining whether the second random number is the same as the first random number;
when the second random number is the same as the first random number, determining that the security authentication on the test platform (102) succeeds; or
when the second random number is different from the first random number, determining that the security authentication on the test platform (102) fails.

10. An integrated circuit (101), being tested by a test platform (102), the integrated circuit (101) comprising means for carrying out steps of the method according to any one of claims 1-4.

11. A security authentication system, wherein the system comprises a test platform (102), an integrated circuit (101), and an encryption platform (103), the test platform (102) being configured to test the IC (101);
the test platform (102) is configured to send an authentication request to the integrated circuit (101);
the integrated circuit (101) is configured to: receive the authentication request, generate a first random number, and send the first random number to the test platform (102);
the test platform (102) is further configured to: receive the first random number, and send the first random number to an encryption platform (103);
the encryption platform (103) is configured to: receive the first random number, encrypt the first random number to obtain a random number ciphertext, and send the random number ciphertext to the test platform (102);
the test platform (102) is further configured to: receive the random number ciphertext, and send the random number ciphertext to the integrated circuit (101);
the integrated circuit (101) is further configured to: receive the random number ciphertext, and decrypt the random number ciphertext to obtain a second random number; and
the integrated circuit (101) is further configured to: perform security authentication on the test platform (102) based on the first random number and the second random number.

12. The system according to claim 11, wherein
the integrated circuit (101) is further configured to:
determine a hash value of a second public key carried in the authentication request;
compare the hash value of the second public key with a hash value of a first public key; and
when the hash value of the first public key is the same as the hash value of the second public key, generate the first random number.

13. The system according to claim 11 or 12, wherein
the encryption platform (103) is further configured to:
encrypt the first random number by using a stored private key, to obtain the random number ciphertext.

14. The system according to any one of claims 11 to 13, wherein
the integrated circuit (101) is further configured to:
decrypt the random number ciphertext by using the second public key carried in the authentication request, to obtain the second random number; or
decrypt the random number ciphertext by using the stored first public key, to obtain the second random number.

15. The system according to any one of claims 11 to 14, wherein
the integrated circuit (101) is further configured to:
determine whether the second random number is the same as the first random number;
when the second random number is the same as the first random number, determine that the security authentication on the test platform (102) succeeds; or
when the second random number is different from the first random number, determine that the security authentication on the test platform (102) fails.

## Patentansprüche

1. Sicherheitsauthentifizierungsverfahren, wobei das Verfahren Folgendes umfasst:
Empfangen (201), durch eine integrierte Schaltung (101), einer durch eine Testplattform (102) gesendeten Authentifizierungsanforderung, wobei die Testplattform (102) dazu konfiguriert ist, die integrierte Schaltung (101) zu testen, und Generieren einer ersten Zufallszahl;
Senden (202) der ersten Zufallszahl durch die integrierte Schaltung (101) an die Testplattform (102), sodass die Testplattform (102) die erste Zufallszahl unter Verwendung eines Netzes an eine Verschlüsselungsplattform (103) sendet;
Empfangen (203) eines durch die Testplattform (102) gesendeten Zufallszahlgeheimtexts, wobei der Zufallszahlgeheimtext erlangt wird, nachdem die Verschlüsselungsplattform (103) die erste Zufallszahl verschlüsselt;
Entschlüsseln (204) des Zufallszahlgeheimtexts, um eine zweite Zufallszahl zu erlangen; und
Durchführen (205) von Sicherheitsauthentifizierung durch die integrierte Schaltung (101) auf der Testplattform (102) auf Grundlage der ersten Zufallszahl und der zweiten Zufallszahl.

2. Verfahren nach Anspruch 1, wobei die integrierte Schaltung (101) einen Hashwert eines ersten öffentlichen Schlüssels speichert und die Authentifizierungsanforderung einen zweiten öffentlichen Schlüssel trägt; und
dementsprechend das Generieren einer ersten Zufallszahl Folgendes umfasst:
Bestimmen eines Hashwerts des zweiten öffentlichen Schlüssels;
Vergleichen des Hashwerts des ersten öffentlichen Schlüssels mit dem Hashwert des zweiten öffentlichen Schlüssels; und
wenn der Hashwert des ersten öffentlichen Schlüssels der gleiche wie der Hashwert des zweiten öffentlichen Schlüssels ist, Generieren der ersten Zufallszahl.

3. Verfahren nach Anspruch 1 oder 2, wobei das Durchführen von Sicherheitsauthentifizierung auf der Testplattform (102) auf Grundlage der ersten Zufallszahl und der zweiten Zufallszahl Folgendes umfasst:
Bestimmen, ob die zweite Zufallszahl die gleiche wie die erste Zufallszahl ist;
wenn die zweite Zufallszahl die gleiche wie die erste Zufallszahl ist, Bestimmen, dass die Sicherheitsauthentifizierung auf der Testplattform (102) erfolgreich ist; oder
wenn sich die zweite Zufallszahl von der ersten Zufallszahl unterscheidet, Bestimmen, dass die Sicherheitsauthentifizierung auf der Testplattform (102) fehlschlägt.

4. Verfahren nach einem der Ansprüche 1 bis 3, wobei das Entschlüsseln des Zufallszahlgeheimtexts, um eine zweite Zufallszahl zu erlangen, Folgendes umfasst:
wenn die integrierte Schaltung (101) den Hashwert des ersten öffentlichen Schlüssels speichert und die Authentifizierungsanforderung den zweiten öffentlichen Schlüssel trägt, Entschlüsseln des Zufallszahlgeheimtexts durch Verwenden des zweiten öffentlichen Schlüssels, um die zweite Zufallszahl zu erlangen; oder
wenn die integrierte Schaltung (101) den ersten öffentlichen Schlüssel speichert, Entschlüsseln des Zufallszahlgeheimtexts durch Verwenden des ersten öffentlichen Schlüssels, um die zweite Zufallszahl zu erlangen.

5. Sicherheitsauthentifizierungsverfahren, wobei das Verfahren Folgendes umfasst:
Senden (301), durch eine Testplattform (102), einer Authentifizierungsanforderung an eine integrierte Schaltung (101), wobei die Testplattform (102) dazu konfiguriert ist, die integrierte Schaltung (101) zu testen;
Empfangen (302), durch die integrierte Schaltung (101), der Authentifizierungsanforderung, Generieren einer ersten Zufallszahl und Senden der ersten Zufallszahl an die Testplattform (102);
Empfangen (303), durch die Testplattform (102), der ersten Zufallszahl und Senden der ersten Zufallszahl an eine Verschlüsselungsplattform (103) über ein Netz;
Empfangen (304), durch die Verschlüsselungsplattform (103), der ersten Zufallszahl, Verschlüsseln der ersten Zufallszahl, um einen Zufallszahlgeheimtext zu erlangen, und Senden des Zufallszahlgeheimtexts an die Testplattform (102);
Empfangen (305), durch die Testplattform (102), des Zufallszahlgeheimtexts und Senden des Zufallszahlgeheimtexts an die integrierte Schaltung (101);
Empfangen (306), durch die integrierte Schaltung (101), des Zufallszahlgeheimtexts und Entschlüsseln des Zufallszahlgeheimtexts, um eine zweite Zufallszahl zu erlangen; und
Durchführen (307), durch die integrierte Schaltung (101), von Sicherheitsauthentifizierung auf der Testplattform (102) auf Grundlage der ersten Zufallszahl und der zweiten Zufallszahl.

6. Verfahren nach Anspruch 5, wobei das Generieren einer ersten Zufallszahl Folgendes umfasst:
wenn die Authentifizierungsanforderung einen zweiten öffentlichen Schlüssel trägt und die integrierte Schaltung (101) einen Hashwert eines ersten öffentlichen Schlüssels speichert,
Bestimmen, durch die integrierte Schaltung (101), eines Hashwerts des zweiten öffentlichen Schlüssels;
Vergleichen des Hashwerts des zweiten öffentlichen Schlüssels mit dem Hashwert des ersten öffentlichen Schlüssels; und
wenn der Hashwert des ersten öffentlichen Schlüssels der gleiche wie der Hashwert des zweiten öffentlichen Schlüssels ist, Generieren der ersten Zufallszahl.

7. Verfahren nach Anspruch 5 oder 6, wobei das Verschlüsseln der ersten Zufallszahl, um einen Zufallszahlgeheimtext zu erlangen, Folgendes umfasst:
Verschlüsseln der ersten Zufallszahl durch Verwenden eines gespeicherten privaten Schlüssels, um den Zufallszahlgeheimtext zu erlangen.

8. Verfahren nach einem der Ansprüche 5 bis 7, wobei das Entschlüsseln des Zufallszahlgeheimtexts, um eine zweite Zufallszahl zu erlangen, Folgendes umfasst:
wenn die integrierte Schaltung (101) den Hashwert des ersten öffentlichen Schlüssels speichert und die Authentifizierungsanforderung den zweiten öffentlichen Schlüssel trägt, Entschlüsseln, durch die integrierte Schaltung (101), des Zufallszahlgeheimtexts durch Verwenden des zweiten öffentlichen Schlüssels, um die zweite Zufallszahl zu erlangen; oder
wenn die integrierte Schaltung (101) den ersten öffentlichen Schlüssel speichert, Entschlüsseln, durch die integrierte Schaltung (101), des Zufallszahlgeheimtexts durch Verwenden des ersten öffentlichen Schlüssels, um die zweite Zufallszahl zu erlangen.

9. Verfahren nach einem der Ansprüche 5 bis 8, wobei das Durchführen, durch die integrierte Schaltung (101), von Sicherheitsauthentifizierung auf der Testplattform (102) auf Grundlage der ersten Zufallszahl und der zweiten Zufallszahl Folgendes umfasst:
Bestimmen, ob die zweite Zufallszahl die gleiche wie die erste Zufallszahl ist;
wenn die zweite Zufallszahl die gleiche wie die erste Zufallszahl ist, Bestimmen, dass die Sicherheitsauthentifizierung auf der Testplattform (102) erfolgreich ist; oder
wenn sich die zweite Zufallszahl von der ersten Zufallszahl unterscheidet, Bestimmen, dass die Sicherheitsauthentifizierung auf der Testplattform (102) fehlschlägt.

10. Integrierte Schaltung (101), die durch eine Testplattform (102) getestet wird, wobei die integrierte Schaltung (101) Mittel zum Ausführen von Schritten des Verfahrens nach einem der Ansprüche 1-4 umfasst.

11. Sicherheitsauthentifizierungssystem, wobei das System eine Testplattform (102), eine integrierte Schaltung (101) und eine Verschlüsselungsplattform (103) umfasst, wobei die Testplattform (102) dazu konfiguriert ist, die IC (101) zu testen;
die Testplattform (102) dazu konfiguriert ist, eine Authentifizierungsanforderung an die integrierte Schaltung (101) zu senden;
die integrierte Schaltung (101) dazu konfiguriert ist: die Authentifizierungsanforderung zu empfangen, eine erste Zufallszahl zu generieren und die erste Zufallszahl an die Testplattform (102) zu senden;
die Testplattform (102) ferner dazu konfiguriert ist: die erste Zufallszahl zu empfangen und die erste Zufallszahl an eine Verschlüsselungsplattform (103) zu senden;
die Verschlüsselungsplattform (103) dazu konfiguriert ist: die erste Zufallszahl zu empfangen, die erste Zufallszahl zu verschlüsseln, um einen Zufallszahlgeheimtext zu erlangen, und den Zufallszahlgeheimtext an die Testplattform (102) zu senden;
die Testplattform (102) ferner dazu konfiguriert ist: den Zufallszahlgeheimtext zu empfangen und den Zufallszahlgeheimtext an die integrierte Schaltung (101) zu senden;
die integrierte Schaltung (101) ferner dazu konfiguriert ist: den Zufallszahlgeheimtext zu empfangen und den Zufallszahlgeheimtext zu entschlüsseln, um eine zweite Zufallszahl zu erlangen; und
die integrierte Schaltung (101) ferner dazu konfiguriert ist: Sicherheitsauthentifizierung auf der Testplattform (102) auf Grundlage der ersten Zufallszahl und der zweiten Zufallszahl durchzuführen.

12. System nach Anspruch 11, wobei
die integrierte Schaltung (101) ferner dazu konfiguriert ist:
einen Hashwert eines in der Authentifizierungsanforderung getragenen zweiten öffentlichen Schlüssels zu bestimmen;
den Hashwert des zweiten öffentlichen Schlüssels mit einem Hashwert eines ersten öffentlichen Schlüssels zu vergleichen; und
wenn der Hashwert des ersten öffentlichen Schlüssels der gleiche wie der Hashwert des zweiten öffentlichen Schlüssels ist, die erste Zufallszahl zu generieren.

13. System nach Anspruch 11 oder 12, wobei
die Verschlüsselungsplattform (103) ferner dazu konfiguriert ist:
die erste Zufallszahl durch Verwenden eines gespeicherten privaten Schlüssels zu verschlüsseln, um den Zufallszahlgeheimtext zu erlangen.

14. System nach einem der Ansprüche 11 bis 13, wobei
die integrierte Schaltung (101) ferner dazu konfiguriert ist:
den Zufallszahlgeheimtext durch Verwenden des in der Authentifizierungsanforderung getragenen zweiten öffentlichen Schlüssels zu entschlüsseln, um die zweite Zufallszahl zu erlangen; oder
den Zufallszahlgeheimtext durch Verwenden des gespeicherten ersten öffentlichen Schlüssels zu entschlüsseln, um die zweite Zufallszahl zu erlangen.

15. System nach einem der Ansprüche 11 bis 14, wobei
die integrierte Schaltung (101) ferner dazu konfiguriert ist:
zu bestimmen, ob die zweite Zufallszahl die gleiche wie die erste Zufallszahl ist;
wenn die zweite Zufallszahl die gleiche wie die erste Zufallszahl ist, zu bestimmen, dass die Sicherheitsauthentifizierung auf der Testplattform (102) erfolgreich ist; oder
wenn sich die zweite Zufallszahl von der ersten Zufallszahl unterscheidet, zu bestimmen, dass die Sicherheitsauthentifizierung auf der Testplattform (102) fehlschlägt.

## Revendications

1. Procédé d'authentification de sécurité, dans lequel le procédé comprend :
la réception (201), par un circuit intégré (101), d'une demande d'authentification envoyée par une plateforme de test (102), dans lequel la plateforme de test (102) est conçue pour tester le circuit intégré (101), et la génération d'un premier nombre aléatoire ;
le circuit intégré (101)
envoyant (202) le premier nombre aléatoire à la plateforme de test (102), de sorte que la plateforme de test (102) envoie le premier nombre aléatoire à une plateforme de chiffrement (103) à l'aide d'un réseau ;
la réception (203) d'un cryptogramme de nombre aléatoire envoyé par la plateforme de test (102), dans lequel le cryptogramme de nombre aléatoire est obtenu après que la plateforme de chiffrement (103) chiffre le premier nombre aléatoire ;
le déchiffrement (204) du cryptogramme de nombre aléatoire pour obtenir un second nombre aléatoire ; et
le circuit intégré (101)
réalisant (205) une authentification de sécurité sur la plateforme de test (102) sur la base du premier nombre aléatoire et du second nombre aléatoire.

2. Procédé selon la revendication 1, dans lequel le circuit intégré (101) stocke une valeur de hachage d'une première clé publique, et la demande d'authentification contient une seconde clé publique ; et
de la même façon, la génération d'un premier nombre aléatoire comprend :
la détermination d'une valeur de hachage de la seconde clé publique ;
la comparaison de la valeur de hachage de la première clé publique avec la valeur de hachage de la seconde clé publique ; et
lorsque la valeur de hachage de la première clé publique est la même que la valeur de hachage de la seconde clé publique, la génération du premier nombre aléatoire.

3. Procédé selon la revendication 1 ou 2, dans lequel la réalisation d'une authentification de sécurité sur la plateforme de test (102) sur la base du premier nombre aléatoire et du second nombre aléatoire comprend :
le fait de déterminer si le second nombre aléatoire est le même que le premier nombre aléatoire ;
lorsque le second nombre aléatoire est le même que le premier nombre aléatoire, le fait de déterminer que l'authentification de sécurité sur la plateforme de test (102) réussit ; ou
lorsque le second nombre aléatoire est différent du premier nombre aléatoire, le fait de déterminer que l'authentification de sécurité sur la plateforme de test (102) échoue.

4. Procédé selon l'une quelconque des revendications 1 à 3, dans lequel le déchiffrement du cryptogramme de nombre aléatoire pour obtenir un second nombre aléatoire comprend :
lorsque le circuit intégré (101) stocke la valeur de hachage de la première clé publique, et que la demande d'authentification contient la seconde clé publique, le déchiffrement du cryptogramme de nombre aléatoire en utilisant la seconde clé publique, pour obtenir le second nombre aléatoire ; ou
lorsque le circuit intégré (101) stocke la première clé publique, le déchiffrement du cryptogramme de nombre aléatoire en utilisant la première clé publique, pour obtenir le second nombre aléatoire.

5. Procédé d'authentification de sécurité, dans lequel le procédé comprend :
l'envoi (301), par une plateforme de test (102), d'une demande d'authentification à un circuit intégré (101), dans lequel la plateforme de test (102) est conçue pour tester le circuit intégré (101) ;
la réception (302), par le circuit intégré (101), de la demande d'authentification, la génération d'un premier nombre aléatoire, et l'envoi du premier nombre aléatoire à la plateforme de test (102) ;
la réception (303), par la plateforme de test (102), du premier nombre aléatoire, et l'envoi du premier nombre aléatoire à une plateforme de chiffrement (103) via un réseau ;
la réception (304), par la plateforme de chiffrement (103), du premier nombre aléatoire, le chiffrement du premier nombre aléatoire pour obtenir un cryptogramme de nombre aléatoire, et l'envoi du cryptogramme de nombre aléatoire à la plateforme de test (102) ;
la réception (305), par la plateforme de test (102), du cryptogramme de nombre aléatoire, et l'envoi du cryptogramme de nombre aléatoire au circuit intégré (101) ;
la réception (306), par le circuit intégré (101), du cryptogramme de nombre aléatoire, et le déchiffrement du cryptogramme de nombre aléatoire pour obtenir un second nombre aléatoire ; et
la réalisation (307), par le circuit intégré (101), d'une authentification de sécurité sur la plateforme de test (102) sur la base du premier nombre aléatoire et du second nombre aléatoire.

6. Procédé selon la revendication 5, dans lequel la génération d'un premier nombre aléatoire comprend :
lorsque la demande d'authentification contient une seconde clé publique, et que le circuit intégré (101) stocke une valeur de hachage d'une première clé publique,
la détermination, par le circuit intégré (101), d'une valeur de hachage de la seconde clé publique ;
la comparaison de la valeur de hachage de la seconde clé publique avec la valeur de hachage de la première clé publique ; et
lorsque la valeur de hachage de la première clé publique est la même que la valeur de hachage de la seconde clé publique, la génération du premier nombre aléatoire.

7. Procédé selon la revendication 5 ou 6, dans lequel le chiffrement du premier nombre aléatoire pour obtenir un cryptogramme de nombre aléatoire comprend :
le chiffrement du premier nombre aléatoire en utilisant une clé privée stockée, pour obtenir le cryptogramme de nombre aléatoire.

8. Procédé selon l'une quelconque des revendications 5 à 7, dans lequel le déchiffrement du cryptogramme de nombre aléatoire pour obtenir un second nombre aléatoire comprend :
lorsque le circuit intégré (101) stocke la valeur de hachage de la première clé publique, et que la demande d'authentification contient la seconde clé publique, le déchiffrement, par le circuit intégré (101), du cryptogramme de nombre aléatoire en utilisant la seconde clé publique, pour obtenir le second nombre aléatoire ; ou
lorsque le circuit intégré (101) stocke la première clé publique, le déchiffrement, par le circuit intégré (101),
du cryptogramme de nombre aléatoire en utilisant la première clé publique, pour obtenir le second nombre aléatoire.

9. Procédé selon l'une quelconque des revendications 5 à 8, dans lequel la réalisation, par le circuit intégré (101), d'une authentification de sécurité sur la plateforme de test (102) sur la base du premier nombre aléatoire et du second nombre aléatoire comprend :
le fait de déterminer si le second nombre aléatoire est le même que le premier nombre aléatoire ;
lorsque le second nombre aléatoire est le même que le premier nombre aléatoire, le fait de déterminer que l'authentification de sécurité sur la plateforme de test (102) réussit ; ou
lorsque le second nombre aléatoire est différent du premier nombre aléatoire, le fait de déterminer que l'authentification de sécurité sur la plateforme de test (102) échoue.

10. Circuit intégré (101), testé par une plateforme de test (102), le circuit intégré (101) comprenant un moyen d'exécuter les étapes du procédé selon l'une quelconque des revendications 1 à 4.

11. Système d'authentification de sécurité, dans lequel le système comprend une plateforme de test (102), un circuit intégré (101), et une plateforme de chiffrement (103), la plateforme de test (102) étant conçue pour tester l'IC (101) ;
la plateforme de test (102) est conçue pour envoyer une demande d'authentification au circuit intégré (101) ; le circuit intégré (101) est conçu pour : recevoir la demande d'authentification, générer un premier nombre aléatoire, et envoyer le premier nombre aléatoire à la plateforme de test (102) ;
la plateforme de test (102) est en outre conçue pour : recevoir le premier nombre aléatoire, et envoyer le premier nombre aléatoire à une plateforme de chiffrement (103) ;
la plateforme de chiffrement (103) est conçue pour : recevoir le premier nombre aléatoire, chiffrer le premier nombre aléatoire pour obtenir un cryptogramme de nombre aléatoire, et envoyer le cryptogramme de nombre aléatoire à la plateforme de test (102) ;
la plateforme de test (102) est en outre conçue pour : recevoir le cryptogramme de nombre aléatoire, et envoyer le cryptogramme de nombre aléatoire au circuit intégré (101) ;
le circuit intégré (101) est en outre conçu pour : recevoir le cryptogramme de nombre aléatoire, et déchiffrer le cryptogramme de nombre aléatoire pour obtenir un second nombre aléatoire ; et
le circuit intégré (101) est en outre conçu pour : réaliser une authentification de sécurité sur la plateforme de test (102) sur la base du premier nombre aléatoire et du second nombre aléatoire.

12. Système selon la revendication 11, dans lequel
le circuit intégré (101) est en outre conçu pour :
déterminer une valeur de hachage d'une seconde clé publique contenue dans la demande d'authentification ;
comparer la valeur de hachage de la seconde clé publique avec une valeur de hachage d'une première clé publique ; et
lorsque la valeur de hachage de la première clé publique est la même que la valeur de hachage de la seconde clé publique, générer le premier nombre aléatoire.

13. Système selon la revendication 11 ou 12, dans lequel
la plateforme de chiffrement (103) est en outre conçue pour :
chiffrer le premier nombre aléatoire en utilisant une clé privée stockée, pour obtenir le cryptogramme de nombre aléatoire.

14. Système selon l'une quelconque des revendications 11 à 13, dans lequel le circuit intégré (101) est en outre conçu pour :
déchiffrer le cryptogramme de nombre aléatoire en utilisant la seconde clé publique contenue dans la demande d'authentification, pour obtenir le second nombre aléatoire ; ou
déchiffrer le cryptogramme de nombre aléatoire en utilisant la première clé publique stockée, pour obtenir le second nombre aléatoire.

15. Système selon l'une quelconque des revendications 11 à 14, dans lequel le circuit intégré (101) est en outre conçu pour :
déterminer si le second nombre aléatoire est le même que le premier nombre aléatoire ;
lorsque le second nombre aléatoire est le même que le premier nombre aléatoire, déterminer que l'authentification de sécurité sur la plateforme de test (102) réussit ; ou
lorsque le second nombre aléatoire est différent du premier nombre aléatoire, déterminer que l'authentification de sécurité sur la plateforme de test (102) échoue.
